# EUROPÄISCHE PATENTSCHRIFT

(11) **EP 4 186 674 B1**
(45) Veröffentlichungstag und Bekanntmachung des Hinweises auf die Patenterteilung: **06.03.2024**
(21) Anmeldenummer: 21210970.6
(22) Anmeldetag: 29.11.2021
(51) Int. Cl.: B29C 45/14

(54) **VORRICHTUNG ZUM SPRITZGIESSEN EINES FORMTEILS MIT EINEM EINLEGER**
DEVICE FOR INJECTION MOULDING A MOULDED PART WITH AN INSERT
DISPOSITIF DE MOULAGE PAR INJECTION D'UNE PIÈCE MOULÉE DOTÉ D'UN INSERT

(43) Veröffentlichungstag der Anmeldung: 31.05.2023
(73) Patentinhaber: IMS Gear SE & Co. KGaA, 78166 Donaueschingen (DE)
(72) Erfinder: Dold, Michael, 78199 Bräunlingen (DE)
(74) Vertreter: Westphal, Mussgnug & Partner Patentanwälte mbB

(56) Entgegenhaltungen:
- DE-A1- 3 135 259
- JP-A- S5 168 665
- JP-A- S6 064 816
- JP-A- S60 109 813

## Beschreibung

Die Erfindung betrifft eine Vorrichtung zum Spritzgießen eines Formteils mit einem Einleger gemäß dem Oberbegriff des Patentanspruchs 1.

Eine solche Vorrichtung ist aus der gattungsbildenden DE 31 35 259 A1 bekannt.

Bei dieser Vorrichtung handelt es sich um eine Spritzgussvorrichtung mit einem aus zwei Formhälften bestehenden Formwerkzeug mit einer Formkavität. Mit diesem Formwerkzeug wird eine metallische Achse als Einleger zur Herstellung von Kunststoffzähnrädern in die Formkavität eingelegt und mit Kunststoff umspritzt. Dieses spritzgusshergestellte Formteil wird mittels eines Auswerfers bei geöffnetem Formwerkzeug ausgestoßen, indem ein zwischen der Formkavität und dem Auswerfer sich befindender zylinderförmiger Einleger in koaxialer Anordnung mit dem in der Formkavität sich befindlichen und bereits umgossenen Einleger durch die Vorschubbewegung des Auswerfers das Formteil auswirft und gleichzeitig den Einleger an der Position des ausgeworfenen und umgossenen Einlegers in der Formkavität eingelegt wird. Damit wird die Dauer der beiden Operationen "Auswerfen des Formteils" und "Einlegen des Einlegers" wesentlich verkürzt, da die Bewegung des Auswerfers unter Vermittlung des eingelegten Einlegers zunächst das Auswerfen des fertiggespritzten Formteils zur Folge hat und nachfolgend der eingelegte Einleger selbst in die Formkavität geschoben wird.

Bei dieser bekannten Vorrichtung gemäß der DE 31 35 259 A1 werden mehrere Einleger in einem senkrecht oder schräg zur Senkrechten verlaufenden Vorschubkanal eines Magazins bereitgehalten. In diesem Vorschubkanal sind die Einleger achsparallel zum Auswerfer übereinander in einer Reihe angeordnet, so dass die Einleger unter Einwirkung der Schwerkraft in Richtung einer am unteren Ende des Vorschubkanals sich befindenden Ausstoßstation bewegt werden, in welcher ein Einleger mit dem Auswerfer fluchtet. Zur Beladung des Magazins mit Einlegern ist dieses mit einer Vereinzelungseinrichtung über flexible Leitungen verbunden.

Um ein sicheres Funktionieren der bekannten Vorrichtung gemäß der DE 31 35 259 A1 sicherzustellen, wird vorgeschlagen, dass dem oberen Ende des Vorschubkanals des Magazins die Kolbenstange eines pneumatischen Arbeitszylinders zugeordnet wird, so dass die Kolbenstange in der Arbeitsstellung auf den im Vorschubkanal des Magazins befindlichen Stapel von stabförmigen Einleger einen Vorschubdruck auf den zuoberst liegenden Einleger ausübt. Damit soll verhindert werden, dass unter ungünstigen Umständen der Einleger in seiner Bahn entlang des Vorschubkanals sich verkeilen könnte.

Bei der bekannten Vorrichtung gemäß der DE 31 35 259 A1 können in dem Formwerkzeug mehrere Formkavitäten realisiert werden, wobei für jede einzelne Formkavität ein die Einleger aufnehmendes Magazin erforderlich ist.

Bei dieser bekannten Vorrichtung gemäß der DE 31 35 259 A1 kann als Nachteil angesehen werden, dass trotz einer auf den zuoberst liegenden Einlegers in dem Vorschubkanal des Magazins wirkenden Kolbenstange ein Verklemmen eines Einlegers nicht auszuschließen ist.

Auch die US 4 443 173 A beschreibt eine Vorrichtung zum Spritzgießen eines Formteils mit einem Einleger, bei welchem ein an einem Formwerkzeug angeflanschten Trichter ungeordnet mit Einleger befüllt wird, wobei das Trichterende parallel in mehrere Kanäle übergeht, die jeweils in einer Formkavität des Formwerkzeugs endet. Die Einleger rutschen aus dem Trichter jeweils in einen Kanal, wobei die Zufuhr eines Einlegers in die jeweilige Formkavität mittels einer Mechanik gesteuert wird, die ihrerseits mit dem Schließen der beiden Formhälften des Formwerkzeugs aktiviert wird.

Bei dieser bekannten Vorrichtung gemäß der US 4 443 173 A kann ebenso ein Verklemmen der Einleger beim Einfallen in den jeweils einer Formkavität zugeordneten Kanal nicht ausgeschlossen werden.

Daher ist es die Aufgabe der Erfindung, eine Vorrichtung der eingangs genannten Art bereitzustellen, bei welcher ein Verklemmen der Einleger in dem Magazin mit hoher Sicherheit verhindert wird, aber dennoch die gesamte Prozessdauer des spritzgegossenen Formteils kurz ist.

Diese Aufgabe wird gelöst durch eine Vorrichtung mit den Merkmalen des Patentanspruchs 1.

Eine solche Vorrichtung zum Spritzgießen eines Formteils mit einem Einleger umfasst:
- ein zwei Formhälften aufweisendes Formwerkzeug mit wenigstens einer Formkavität,
- eine Einlegerladevorrichtung mit wenigstens einer Einlegerschubstange zum Positionieren eines Einlegers in der wenigstens einen Formkavität,
- wenigstens ein Magazin mit in einer Reihe nebeneinander angeordneten Einlegern, wobei ein Einleger mit der wenigstens einen Einlegerschubstange fluchtet, und
- ein in der wenigstens einen Formkavität endender Einlegerzuführkanal, in welchen der mit dem der wenigstens einen Einlegerschubstange fluchtende Einleger aus dem wenigstens einen Magazin mittels der Einlegerschubstange hinein schiebbar ist.

Erfindungsgemäß ist vorgesehen, dass
- das Magazin eine waagerecht ausgerichtete Einlegeraufnahmefläche mit benachbarten Ablagepositionen für die Einleger aufweist, wobei die Ablagepositionen mit einer an die Kontur der Einleger angepassten Ablagekontur ausgebildet sind,
- das Magazin einen Ladebereich mit wenigstens einer frei zugänglichen Ablageposition zum maschinellen Beladen desselben mit wenigstens einem Einleger aufweist, und
- zum Positionieren eines Einlegers in der mit der Einlegerschubstange fluchtenden Ablageposition der im Ladebereich abgelegte wenigstens eine Einleger mittels einer Schiebevorrichtung in Richtung eines benachbarten Einlegers bewegbar ist, wobei die Einleger auf der Einlegeraufnahmefläche sukzessive in die jeweils benachbarte Ablageposition schiebbar sind.

Bei dieser erfindungsgemäßen Vorrichtung wird eine Einlegeraufnahmefläche des Magazins mit den Einlegern maschinell in hierfür vorgesehene Ablagepositionen beladen, wobei die Einlegeraufnahmefläche bezüglich des Formwerkzeugs horizontal ausgerichtet ist und dadurch die Verklemmungsgefahr der Einleger deutlich reduziert ist. Um eine lagesichere Position der einzelnen Einleger auf der Einlegeraufnahmefläche sicherzustellen und gleichzeitig das Weiterschieben jedes Einlegers auf die direkt benachbarte Ablageposition zu ermöglichen, wenn die mit der Einlegerschubstange fluchtende Ablageposition auf der Einlegeraufnahmefläche freigeworden ist, sind die Ablagepositionen mit einer an die Kontur der Einleger angepassten Ablagekontur ausgebildet.

Die horizontale Ausrichtung der Einlegeraufnahmefläche ermöglicht die Anordnung mehrerer Formkavitäten in der Ebene der Einlegeraufnahmefläche. Somit ist für mehrere solcher Formkavitäten nur ein einziges Magazin erforderlich.

Das sukzessive Weiterschieben der einzelnen Einleger in die jeweils benachbarte Ablageposition wird funktionssicher dadurch ermöglicht, dass vorzugsweise der Abstand benachbarter Ablagepositionen derart ausgebildet ist, dass die in diesen benachbarten Ablagepositionen abgelegten Einleger in Anlage liegen. Bei einem vorzugsweise zylinderförmigen Einleger mit kreisförmigem Querschnitt bedeutet dies, dass der Abstand zwischen den benachbarten Ablagepositionen dem Durchmesser eines solchen Einlegers entspricht.

Die Beladung der Einlegeraufnahmefläche ist aufgrund deren horizontalen Ausrichtung schnell und einfach maschinell, bspw. mittels eines Roboters ausführbar, da der Ladebereich des Magazins frei zugänglich ist, d. h. der Ladebereich ragt bspw. über das Formwerkzeug hinaus und kann damit behinderungsfrei durch einen Roboterarm erreicht werden.

Um ein Übereinanderschieben der Einleger zu verhindern, wenn diese in die jeweils benachbarte Ablageposition weiter geschoben werden, ist gemäß einer Weiterbildung vorgesehen, dass
- das Magazin in dem feststehenden Formteil angeordnet ist,
- die Einlegeraufnahmefläche des Magazins zusammen mit einer Trennwand des feststehenden Formteils einen Magazinschacht bildet, und
- der kleinste Abstand zwischen der Einlegeraufnahmefläche und der Trennwand wenige 1/10mm, insbesondere 3/10mm bis 5/10mm größer ist als die Erstreckung des Einlegers senkrecht zur Trennwand.

Dies bedeutet bspw. bei einem zylinderförmigen Einleger mit kreisförmigem Querschnitt, dass der kleinste Abstand zwischen der Einlegeraufnahmefläche und der Trennwand nur wenige 1/10mm größer ist als der Durchmesser eines solchen zylinderförmigen Einlegers.

In einer Weiterbildung der Erfindung weist die Einlegeraufnahmefläche eine wellenförmige Oberflächenstruktur aus Wellentälern und Wellenbergen auf, wobei die Wellentäler jeweils als Ablagekontur an die Kontur der Einleger angepasst sind.

Die Anpassung der wellenförmigen Oberflächenstruktur erfolgt derart, dass der Radius des Wellenberges höchstens dem Radius des Wellentales entspricht, also das eine Mulde darstellende Wellental nicht zu flach wird, um dadurch ein Wegrollen des Einlegers zu verhindern.

Eine zur wellenförmigen Oberflächenstruktur vorgeschlagene Alternative besteht in einer sägezahnförmigen Oberflächenstruktur mit flach ansteigenden und steil abfallenden Flanken, wobei die Einleger jeweils zwischen einer steil abfallenden Flanke und einer flach ansteigenden Flanke als an die Kontur der Einleger angepasste Ablagekontur auf der Einlegeraufnahmefläche angeordnet sind. Vorzugsweise liegt der Winkel der flach ansteigenden Flanke der sägezahnförmigen Oberflächenstruktur der Einlegeraufnahmefläche zwischen 20° und 30°.

Eine weitere vorteilhafte Weiterbildung der Erfindung besteht darin, dass
- das Formwerkzeug wenigstens eine weitere Formkavität aufweist, welche in der Ebene der Einlegeraufnahmefläche benachbart zu der wenigstens einen Formkavität angeordnet ist,
- die Einlegerladevorrichtung wenigstens eine weitere Einlegerschubstange zum Positionieren eines Einlegers in der weiteren Formkavität aufweist, und
- ein in der weiteren Formkavität endender Einlegerzuführkanal vorgesehen ist, in welchen der mit dem der weiteren Einlegerschubstange fluchtende Einleger aus dem Magazin mittels der weiteren Einlegerschubstange hinein schiebbar ist.

Damit können aus einem einzigen Magazin mehrere Formkavitäten gleichzeitig mit einem Einleger versorgt werden, wobei lediglich die Einlegerladevorrichtung eine weitere Einlegerschubstange aufweist. Demgegenüber ist für die aus dem Stand der Technik gemäß der DE 31 35 259 A1 bekannte Vorrichtung für jede Formkavität des Formwerkzeugs ein Magazin erforderlich.

Eine weitere vorteilhafte Ausführungsform sieht vor, dass
- das Formwerkzeug wenigstens eine weitere Formkavität aufweist, welche in einer zur Ebene der Einlegeraufnahmefläche des wenigstens einen Magazins parallelen Ebene angeordnet ist, und
- in der parallelen Ebene ein weiteres Magazin gemäß den vorhergehenden Ansprüchen in dem Formwerkzeug angeordnet ist.

Sind damit mehrere übereinander und parallel angeordnete Reihen von Formkavitäten in dem Formwerkzeug vorhanden, so ist für jede waagerecht verlaufende Reihe ein Magazin erforderlich. Jedes dieser Magazine weist einen frei zugänglichen Ladebereich auf, der jeweils maschinell, bspw. mit nur einem einzigen Roboter mit Einlegern beladbar ist.

Gemäß einer weiteren Weiterbildung der Erfindung ist die Einlegerladevorrichtung als Auswerfervorrichtung ausgebildet, wobei die Einlegerschubstange ein Auswerfer ist.

Somit wird nachdem mittels der Einlegerschubstange ein Einleger in eine Formkavität geschoben und ein Spritzgussvorgang abgeschlossen ist mittels dieser Einlegerschubstange als Auswerfer bei offenem Formwerkzeug das spritzgegossene Formteil aus dem Formwerkzeug ausgeworfen.

Alternativ zu der zuletzt genannten Weiterbildung ist ein Entnahmemittel, vorzugsweise ein Entnahmeroboter vorgesehen, mit welchem bei offenem Formwerkzeug ein spritzgegossenes Formteil aus dem Formwerkzeug entnehmbar ist.

Der Vorteil einer solchen Vorrichtung besteht darin, dass eine Beschädigung der Formteile durch ein Herabfallen verhindert wird. Sind mehrere Formkavitäten vorgesehen, können diese nestgetrennt mittels eines solchen Entnahmeroboters abgelegt werden.

Die Erfindung wird nachfolgend anhand von Ausführungsbeispielen unter Bezugnahme auf die beigefügten Figuren ausführlich beschrieben. Es zeigen:
- Figur 1 bis Figur 5: eine perspektivische Explosionsdarstellung einer Vorrichtung mit einem Formwerkzeug gemäß einer ersten Ausführungsform der Erfindung in verschieden Prozessstufen eines Formteils,
- Figur 6: eine perspektivische Darstellung eines Magazins der Vorrichtungen gemäß Figuren 1 bis 5,
- Figur 7: eine Teilschnittdarstellung eines in einem Formwerkzeug gemäß der Figuren 1 bis 5 verbauten Magazins, und
- Figur 8: eine schematisch dargestellte Einlegeraufnahmefläche eines Magazins mit einer sägezahnförmigen Oberflächenstruktur.

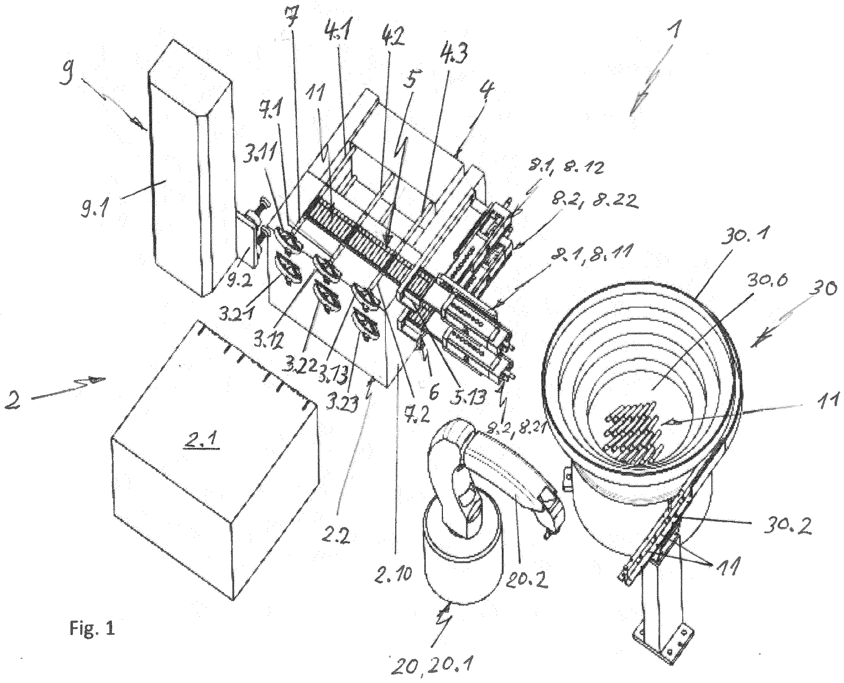

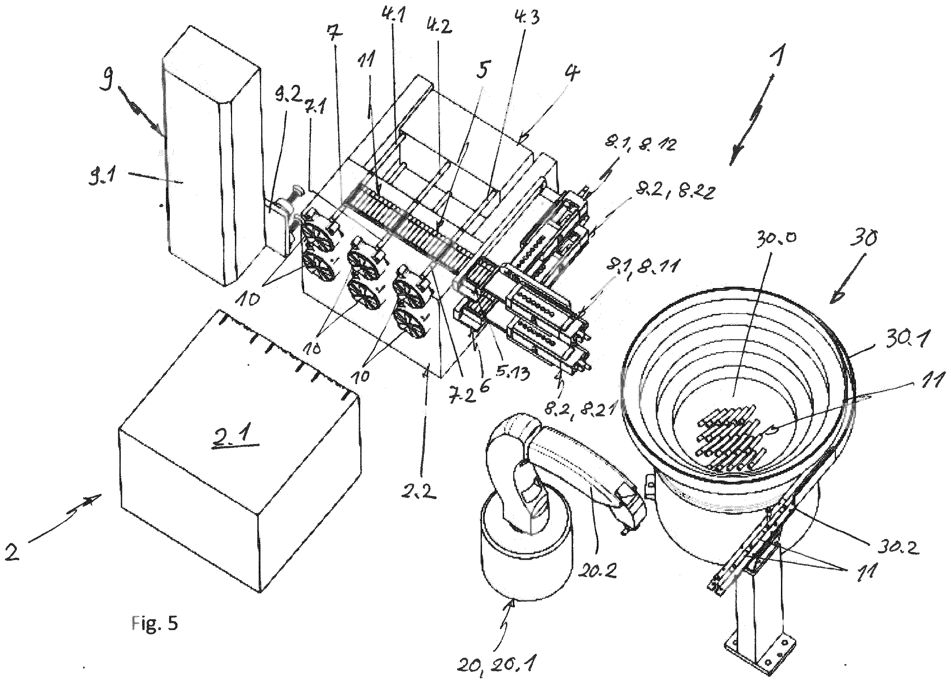

Die Vorrichtung 1 gemäß den Figuren 1 bis 5 zum Spritzgießen eines einen zylinderförmigen Einleger 11 aufweisenden Formteils 10 (vgl. Figur 5) umfasst als zentrale Komponente ein Formwerkzeug 2 mit zwei Formhälften 2.1 und 2.2, einen als Zuführroboter 20.1 ausgeführtes Handhabungswerkzeug 20, mit welchem das Formwerkzeug 2 mit Einlegern 11 beladen werden, einer Fördervorrichtung 30, welche für den Zuführroboter 20.1 die Einleger 11 bereitstellt und ein als Entnahmeroboter 9.1 ausgeführtes Entnahmemittel 9, welches die spritzgegossenen Formteile 10 aus dem offenen Formwerkzeug 2 entnimmt (vgl. Figur 5) .

Die aufgeführten Komponenten der Vorrichtung 1, nämlich das Formwerkzeug 2, der Zuführroboter 20.1, die Fördervorrichtung 30 und der Entnahmeroboter 9.1 befinden sich auf einer Standfläche, die der x-y-Ebene des in den Figuren 1 bis 5 dargestellten Koordinatensystems entspricht.

Das Formwerkzeug 2 weist zwei Reihen von jeweils drei Formkavitäten (auch Formnester genannt) auf, nämlich eine erste waagerecht verlaufende Reihe mit Formkavitäten 3.11, 3.12 und 3.13 sowie eine bezogen auf die Senkrechte (z-Richtung) unterhalb und parallel zur ersten Reihe verlaufende zweite Reihe mit Formkavitäten 3.21, 3.22 und 3.23. Diese Formkavitäten sind als zylinderförmiger Hohlraum ausgebildet, wobei der Einleger 11 mit der Zylinderachse des Hohlraums einer Formkavität fluchtet.

Die Formkavitäten 3.11, 3.12, 3.13, 3.21, 3.22 und 3.23 werden im Wesentlichen von der feststehenden Formhälfte 2.2 des in Figur 1 offen dargestellten Formwerkzeugs 2 gebildet. Die Formhälfte 2.1 ist der bewegliche Teil des Formwerkzeugs 2.

Fluchtend mit der Zylinderachse des Hohlraums einer Formkavität 3.11, 3.12, 3.13, 3.21, 3.22 und 3.23 führt jeweils ein waagerecht verlaufender Einlegerzuführkanal 7, 7.1 und 7.2 in eine Formkavität, wobei die Einlegerzuführkanäle für die Formkavitäten 3.21, 3.22 und 3.23 in den Figuren 1 bis 5 nicht sichtbar dargestellt sind. Die Einlegerzuführkanäle 7, 7.1 und 7.2 sowie die Einlegerzuführkanäle für die Formkavitäten 3.21, 3.22 und 3.23 enden auf der Rückseite der Formhälfte 2.2 des Formwerkzeugs 2, wenn die Formkavitäten 3.11, 3.12, 3.13, 3.21, 3.22 und 3.23 aufweisende Seite der Formhälfte 2.1 als Vorderseite bezeichnet wird.

Die feststehende Formhälfte 2.2 weist eine mit der Richtung der Einlegerzuführkanäle 7, 7.1 und 7.2 (im Folgenden sind damit auch die Einlegerzuführkanäle der Formkavitäten 3.21, 3.22 und 3.23 umfasst) verschiebbare Einlegerladevorrichtung 4 auf, die für jeden Einlegerzuführkanal 7, 7.1 und 7.2 eine Einlegerschubstange 4.1, 4.2 und 4.3 und ebenso für die Einlegerzuführkanäle der Formkavitäten 3.21, 3.22 und 3.23 jeweils eine Einlegerschubstange (ohne Bezugszeichen den Figuren 1 bis 5) aufweisen. Mit dem verfahren der Einlegervorrichtung 4 in y-Richtung werden die Einlegerschubstangen 4.1, 4.2 und 4.3 in die Einlegerzuführkanäle 7, 7.1 und 7.2 eingefahren, um entweder Einleger 11 in die Formkavitäten 3.11, 3.12 und 3.13 einzuführen und/oder die spritzgegossenen Formteile 10 aus den Formkavitäten 3.11, 3.12 und 3.13 auszuwerfen, wie weiter unten erläutert werden soll (entsprechendes gilt für die Formkavitäten 3.21, 3.22 und 3.23).

Zur Zuführung der Einleger 10 weist die Formhälfte 2.2 für die Formkavitäten 3.1, 3.12 und 3.13 der ersten Reihe ein Magazin 5 und für die Formkavitäten 3.21, 3.22 und 3.23 ein weiteres Magazin 6 in der Ebene der Einlegerzuführkanäle 7, 7.1 und 7.2 bzw. in der Ebene der Einlegerzuführkanäle der Formkavitäten 3.21, 3.22 und 3.23 auf, die mit mehreren zylinderförmigen Einlegern 11 beladen werden.

Der Vorteil der waagerecht ausgerichteten Magazine 5 und 6 liegt also darin, dass über ein Magazin 5 bzw. 6 mehrere nebeneinanderliegende Formkavitäten 3.11, 3.12 und 3.13 bzw. 3.21, 3.22 und 3.23 bestückt werden können.

Das Magazin 5 bzw. 6 weist in der x-y-Ebene eine rechteckförmige Kontur mit zwei Längsseiten und zwei Kurzseiten auf, wobei die Längsseiten senkrecht zur Richtung der Einlegerzuführkanäle 7, 7.1 und 7.2 ausgerichtet sind. Die beiden Magazine 5 und 6 ragen an einer Stirnseite 2.10 der Formhälfte 2.2 über das Formwerkzeug 2 hinaus. Dieser über die Stirnseite 2.10 ragende Teil des Magazins 5 bildet einen Ladebereich 5.13, in welchen die Einleger 11 aus der Fördervorrichtung 30 mittels des Zuführroboters 20.1 abgelegt werden. Für das weitere Magazin 6 gilt entsprechendes.

Im in der Formhälfte 2.2 eingebauten Zustand des Magazins 5 sind die Einleger 11 derart in dem Magazin 5 gelagert, dass jeweils ein Einleger 11 mit einem Einlegerzuführkanal 7, 7.1 und 7.2 fluchtet. Damit ist es möglich, dass die an diesen Positionen abgelegten Einleger 11 jeweils mittels der Einlegerschubstange 4.1, 4.2 und 4.3 über jeweils einen Einlegerzuführkanal 7, 7.1 und 7.2 in jeweils eine Formkavität 3.11, 3.12 und 3.13 schiebbar ist. Entsprechendes gilt für das weitere Magazin 6.

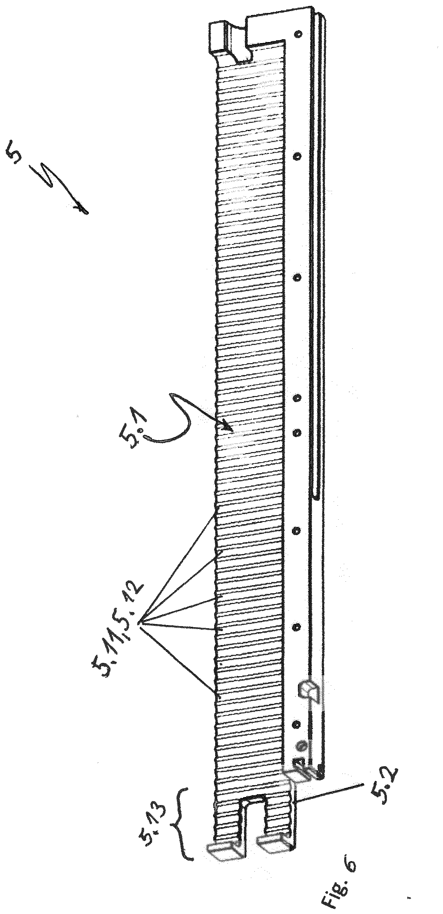

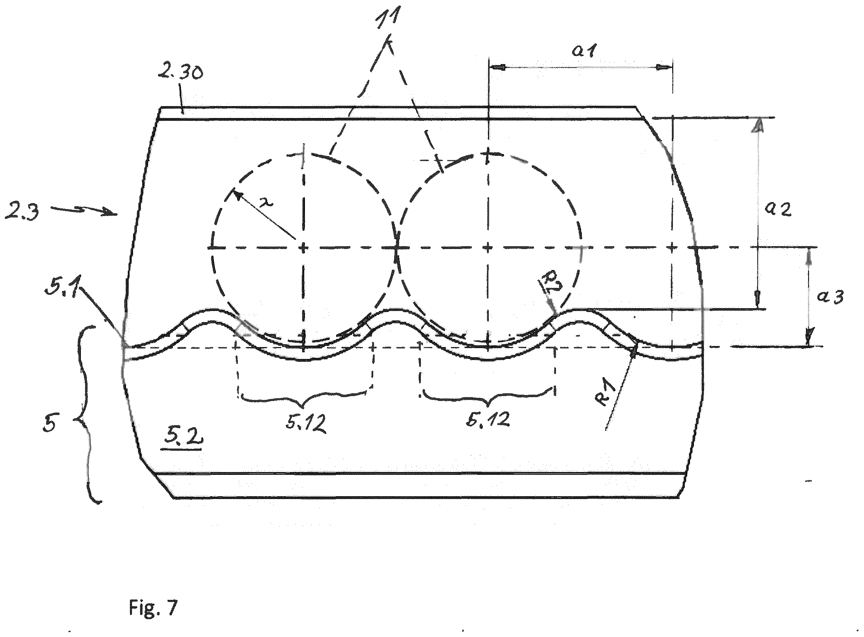

Im Detail ist das Magazin 5 (entsprechendes gilt für das weitere Magazin 6) in Figur 6 sowie im in der Formhälfte 2.2 eingebautem Zustand gemäß Figur 7 dargestellt.

Gemäß diesen Figuren 6 und 7 umfasst das Magazin 5 eine Trägerplatte 5.2 mit einer Einlegeraufnahmefläche 5.1, auf welcher die Einleger 11 abgelegt werden. Diese Einlegeraufnahmefläche 5.1 sieht für jeden Einleger 11 eine Ablageposition 5.11 vor, die jeweils eine an die äußere Kontur des Einlegers 11 angepasste Ablagekontur 5.12 aufweist, so dass die Einleger 11 direkt benachbart aneinander liegen. Hierzu weist die Einlegeraufnahmefläche 5.1 eine Oberflächenstruktur mit Wellentälern und Wellenbergen auf, wobei ein Wellental als Ablagekontur 5.12 einer Ablageposition 5.11 an einen Einleger 11 konturangepasst ist, d. h. ein Teil der Mantelfläche des Einlegers 11 liegt in der von dem Wellental gebildeten Mulde.

Die Wellentäler und die dazwischen liegenden Wellenberge weisen eine Geometrie auf, so dass die direkt benachbarten Einleger 11 nebeneinander liegen und sich gegenseitig berühren. Damit entspricht der Abstand a1 von zwei benachbarten Ablagepositionen 5.11 dem Durchmesser 2r der Einleger 11, wie dies in Figur 7 schematisch dargestellt ist.

Der Abstand der Formkavitäten 3.11, 3.12 und 3.13 beträgt ein ganzzahliges Vielfaches des Durchmessers 2r eines Einlegers 11, dadurch fluchten die Einlegerschubstangen 4.2 und 4.3 jeweils genau mit einer Ablageposition 5.11 eines Einlegers 11, d. h. mit einem Wellental als Ablagekontur 5.12.

Die Wellentäler als Ablagekonturen 5.12 werden zur Herstellung der wellenförmigen Oberflächenstruktur der Einlegeraufnahmefläche 5.1 durch kreisbogenförmige Wellentäler mit einem Radius R1 gebildet, ebenso sind die Wellenberge kreisbogenförmig mit einem Radius R2 ausgeführt. Damit die von einem Wellental gebildete Mulde auf der Einlegeraufnahmefläche 5.1 nicht zu flach wird und damit die Gefahr des Wegrollens eines Einlegers 11 besteht, dürfen die Wellenberge zwischen den Wellentälern nicht zu niedrig sein, als darf der Radius R2 eines Wellenberges nicht größer als der Radius R1 des Wellentals sein (R2 ≤ R1).

Gemäß Figur 7 bildet das Magazin 5 im in der feststenden Formhälfte 2.2 eingebautem Zustand zusammen mit einer Seitenwand 2.30 einen Magazinschacht 2.3, so dass die Einleger 11 ausgehend vom Ladebereich 5.13 des Magazins 5 über die Einlegeraufnahmefläche 5.1 sukzessiv von einer Ablageposition 5.11 in die benachbarte Ablageposition 5.11 über die Wellenberge der Oberflächenstruktur schiebbar ist.

Damit der von einem Einleger 11 beim Schieben in die benachbarte Ablageposition 5.11 zu überwindende Hub nicht zu groß wird, darf der Radius R2 eines Wellenberges auch nicht zu klein sein. Daher sollte die Steigung der Tangente im Übergang von einem Wellental zu einem Wellenberg kleiner als 45° sein. Im Ergebnis sollte die zum Schieben eines Einlegers 11 in die benachbarte Ablageposition 5.11 erforderliche Schiebekraft in die Richtung der Schiebebewegung eines Einleger 11 wirken.

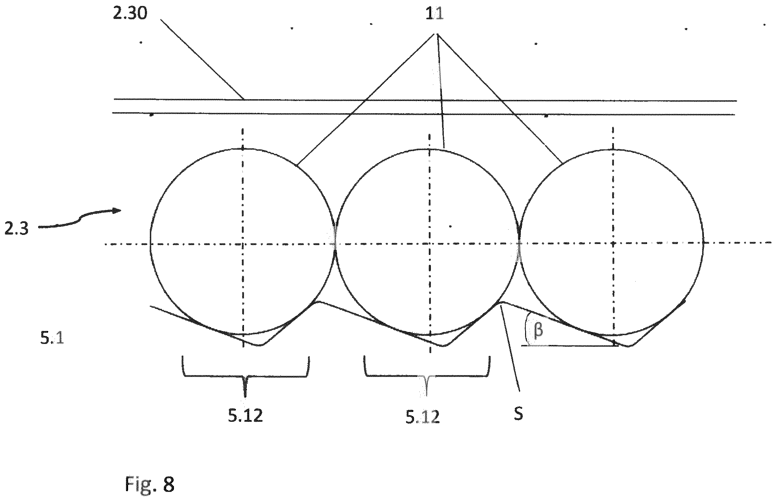

Alternativ zu einer wellenförmigen Oberflächenstruktur kann die Einlegeraufnahmefläche 5.1 gemäß Figur 8 eine sägezahnförmige Oberflächenstruktur mit flach ansteigenden und steil abfallenden Flanken aufweisen, wobei die Einleger 11 jeweils zwischen einer steil abfallenden Flanke und einer flach ansteigenden Flanke als an die Kontur der Einleger 11 angepasste Ablagekontur 5.12 auf der Einlegeraufnahmefläche 5.1 angeordnet sind. Der Winkel β der flach ansteigenden Flanke bestimmt die Lagestabilität eines Einlegers 11 und die Schiebekraft und sollte zwischen 20° und 30° liegen. Der Einleger 11 sollte dabei tief genug in der Sägezahnkontur liegen, um zu verhindern, dass er wegrollen kann, auch wenn durch die Werkzeugbewegungen Erschütterungen entstehen. Die Spitze S des Sägezahns der sägezahnförmigen Oberflächenstruktur der Einlegeraufnahmefläche 5.1 ist verrundet, um einen Verschleiß der Einlegeraufnahmefläche 5.1 zu vermeiden.

Nachfolgend wird im Rahmen der Beschreibung der Herstellung eines Formteils 10 auch das Bestücken des Magazins 5 mit Einleger 11 erläutert.

Die Figur 1 zeigt einen Zustand der Vorrichtung 1 mit einem offenen Formwerkzeug 1, in welchem zuvor ein spritzgegossenes Formteil 10 (in Figur 1 nicht dargestellt) mit dem Entnahmeroboter 9.1 aus den Formkavitäten 3.11, 3.12, 3.13, 3.21, 3.22 und 3.23 entnommen wurde.

In den Ablagepositionenn 5.11, die mit den Einlegerzuführkanäle 7, 7.1 und 7.2 fluchten, sind gemäß Figur 1 keine Einleger 11 abgelegt. Diese Ablagepositionen 5.11 sind in Figur 1 zur Kenntlichmachung "schwarz" dargestellt. Im Ladebereich 5.13 sind drei Einleger 11 abgelegt.

Im darauffolgenden Herstellungsschritt bzw. in der darauffolgenden Prozessstufe werden mittels einer Schiebevorrichtung 8.1 für das Magazin 5 die Einleger 11 aus dem Ladebereich 5.13 in den Magazinschacht 2.3 geschoben, so dass die gemäß Figur 1 leeren Ablagepositionen 5.11, die mit den Einlegerschubstangen 4.1, 4.2 und 4.3 fluchten, mit Einlegern 11 belegt werden. Entsprechendes gilt für das Magazin 6. die dort abgelegten Einleger 11 werden mittels einer weiteren Schiebevorrichtung 8.2 aus dem Ladebereich des Magazins 6 in den entsprechenden Magazinschacht geschoben.

Die beiden Schiebevorrichtungen 8.1 und 8.2 weisen jeweils einen Längsaktuator 8.11 bzw. 8.21 sowie einen Queraktuator 8.12 bzw. 8.22 auf.

Mit den beiden Queraktuatoren 8.12 und 8.22 wird jeweils der Längsaktuator 8.21 bzw. 8.22 in y-Richtung, also in Richtung der Einlegerschubstangen 4.1, 4.2 und 4.3 verschoben, so dass die beiden Längsaktuatoren 8.11 und 8.21 jeweils mit einem Magazin 5 bzw. 6, also quer zu den Einlegerzuführkanälen 7, 7.1 und 7.2 gerichtet sind.

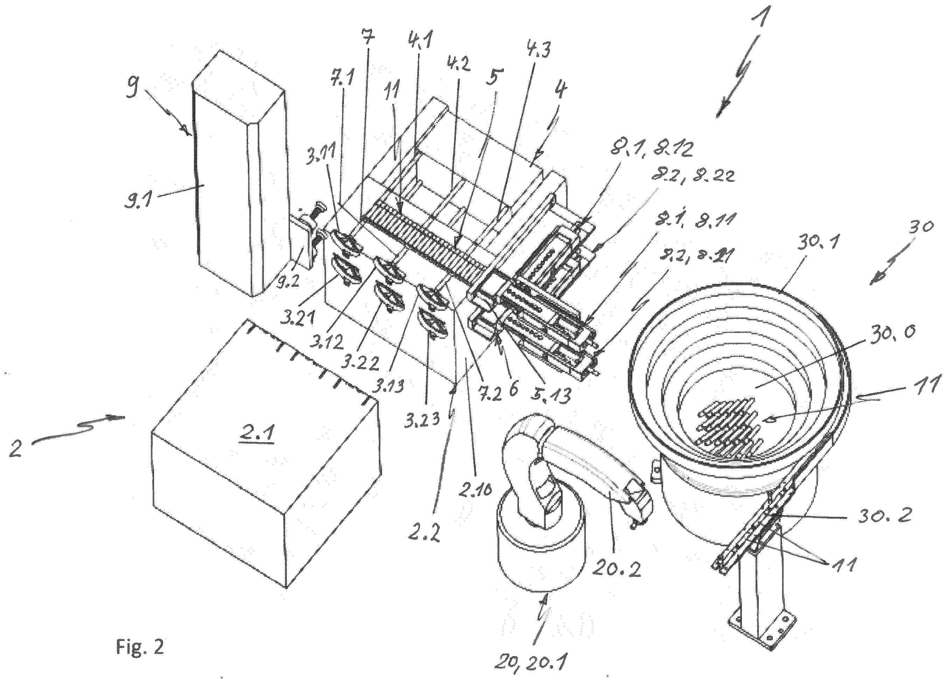

Mit dem Längsaktuator 8.11 wird kraftschlüssig auf den randseitigen, also auf den zuletzt eingelegten Einleger 11 Druck in Richtung auf den benachbarten Einleger 11 ausgeübt, so dass der jeweils nachfolgende Einleger 11 sukzessiv in die benachbarte Ablageposition 5.11 geschoben wird, bis die mit den Einlegerschubstangen 4.1, 4.2 und 4.3 fluchtenden Ablagepositionen 5.11 jeweils mit einem Einleger 11 belegt sind. Entsprechendes gilt auch für den Längsaktuator 8.21. Damit liegen keine Einleger 11 in dem Ladebereich 5.13 des Magazins 5 bzw. in dem entsprechenden Ladebereich des weiteren Magazins 6. Diesen Zustand des Formwerkzeugs 2 zeigt Figur 2.

Das Weiterschieben der Einleger 11 mittels des Längsaktuators 8.11 wird durch eine entsprechende Dimensionierung des Magazinschachtes 2.3 und der wellenförmigen Oberflächenstruktur der Einlegeraufnahmefläche 5.1 des Magazins 5 und in entsprechender Weise des weiteren Magazins 6 bewerkstelligt.

Hierzu ist gemäß Figur 7 der Abstand a2 zwischen einem Wellenberg einer Ablageposition 5.11 und der die Höhe in z-Richtung des Magazinschachtes 2.3 begrenzenden Seitenwand 2.30 an den Durchmesser 2r der Kreisfläche des zylinderförmigen Einlegers 11 so angepasst, dass ein Einleger 11 über den Wellenberg in die benachbarte Ablageposition 5.11 geschoben werden kann. Dabei ist der Abstand a2 nur geringfügig größer, d. h. nur wenige 1/10mm, d. h. insbesondere 3/10mm bis 5/10mm größer als der Durchmesser 2r des Einlegers 11.

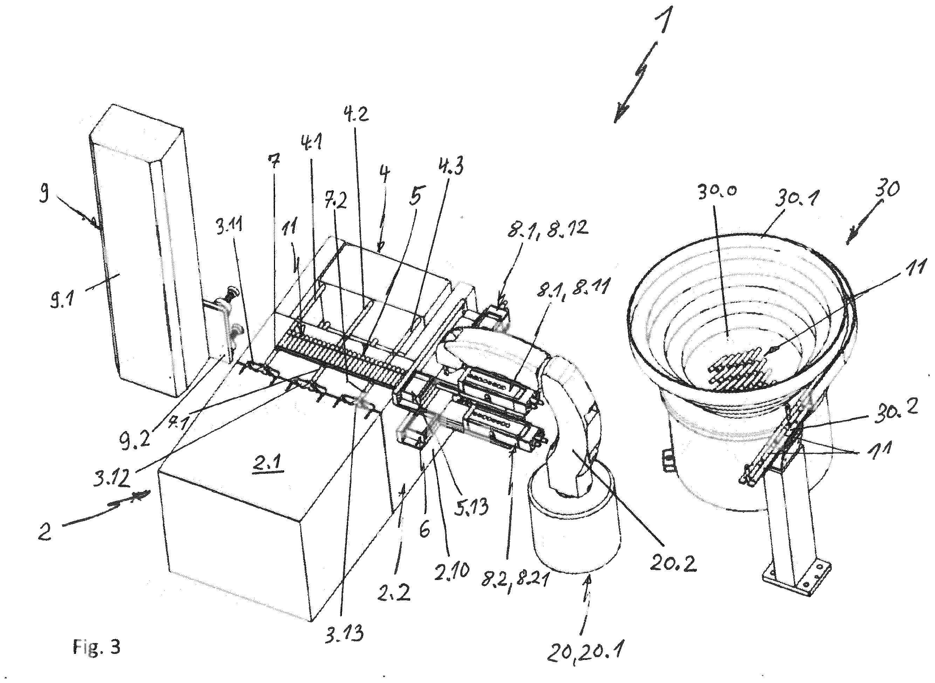

Mit den erneut mit Einlegern 11 beladenen Ablagepositionen 5.11 wird das Formwerkzeug 2 geschlossen (vgl. Figur 3) und mit dem Vorgang des Spritzgießens begonnen und gleichzeitig mittels eines Roboterarm 20.2 des Zuführroboters 20.1 ein Einleger 11 für das Magazin 5 und ein Einleger 11 für das weitere Magazin 6 von einer Sammelplatte 30.10 eines Wendelförderers 30.1 der Fördervorrichtung 30 entnommen und in den Ladebereich 5.13 des Magazins 5 bzw. in den entsprechenden Ladebereich des weiteren Magazins 6 eingelegt und so oft wiederholt bis die Ladebereiche der beiden Magazine 5 und 6 vollständig bestückt sind. Zuvor werden die Schiebevorrichtungen 8.1 und 8.2 aktiviert, so dass die beiden Queraktuatoren 8.12 und 8.22 die beiden Längsaktuatoren 8.11 und 8.21 in y-Richtung, und zwar entgegengesetzt zur Formhälfte 2.2 des Formwerkzeugs 2 verschieben und dadurch der Ladebereich 5.13 des Magazins 5 und der entsprechende Ladebereich des weiteren Magazins 6 für den Zuführroboter 20.1 frei zugänglich sind.

Zur Kontrolle, ob die beiden Magazine 5 und 6 vollständig mit Einleger 11 bestückt sind, ist lediglich ein einziger Sensor erforderlich, welcher die letzte Ablageposition 5.11 auf der Einlegeraufnahmefläche 5.1 überwacht. Diese letzte Ablageposition 5.11 liegt am gegenüberliegenden Ende des Magazins 5 bezüglich des Ladebereichs 5.13. Entsprechendes gilt für das weitere Magazin 6. Sobald ein solcher Sensor an der letzten Ablageposition 5.11 einen Einleger 11 detektiert, sind zwangsläufig alle Ablageposition 5.11 in den beiden Magazinen 5 und 6 mit Einlegern 11 bestückt.

Die Einleger 11 werden der Fördervorrichtung 30 über eine lineare Zuführung 30.2 dem Wendelförderer 30.1 zugeführt.

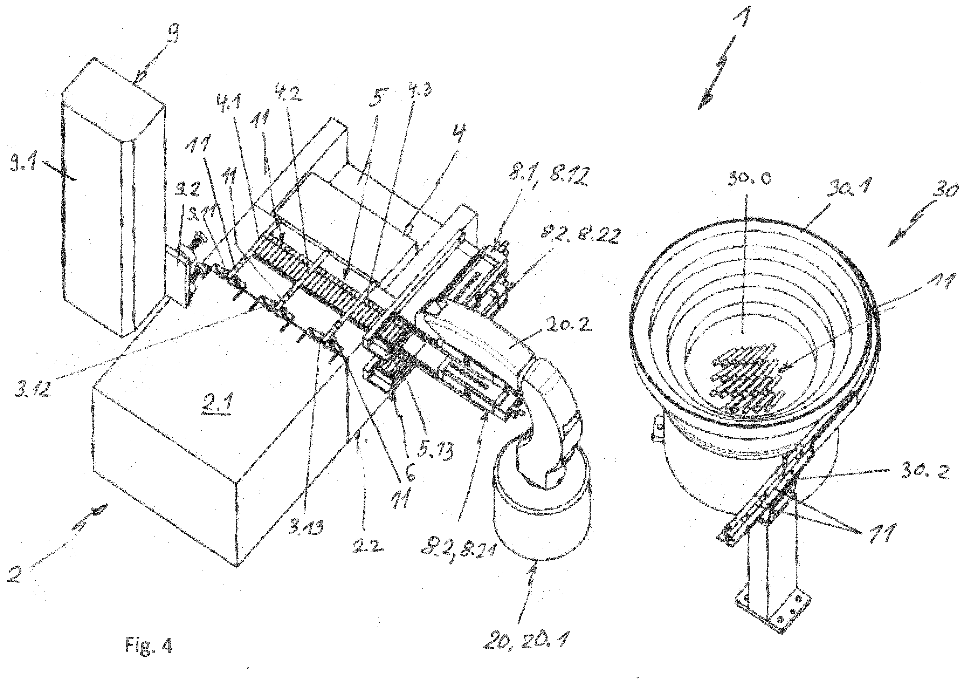

Entsprechend von Figur 4 wird die Einlegerladevorrichtung 4 in Richtung auf die Formhälfte 2.2 bewegt, wodurch die Einlegerschubstangen 4.1, 4.2 und 4.3 sowie die entsprechenden Einlegerschubstangen für die Formkavitäten 3.21, 3.22 und 3.23 in die zugehörigen Einlegerzuführkanäle 7, 7.1 und 7.2 sowie die für die Formkavitäten 3.21, 3.22 und 3.23 vorgesehenen Einlegerzuführkanäle einfahren und dadurch die Einleger 11 aus den mit den entsprechenden Einlegerschubstangen fluchtenden Ablagepositionen in die Formkavitäten 3.11, 3.12, 3.13, 3.21 3.22 und 3.23 geschoben werden. Auch dieser Zustand des Formwerkzeugs 2 ist in Figur 4 dargestellt.

Ist der Vorgang des Spritzgießen beendet, werden die spritzgegossenen Formteile 10 mittels der Einlegervorrichtung 4 zusammen mit den Einlegerschubstangen 4.1, 4.2 und 4.3 und den entsprechenden Einlegerschubstangen für die Formkavitäten 3.21, 3.22 und 3.23 ausgeworfen. Hierzu ist die Einlegerladevorrichtung 4 als Auswerfervorrichtung eingerichtet mit den Einlegerschubstangen 4.1, 4.2 und 4.3 und den entsprechenden Einlegerschubstangen für die Formkavitäten 3.21, 3.22 und 3.23 als Auswerfer.

Gemäß Figur 4 sind die Einlegerschubstangen 4.1, 4.2 und 4.3 und die entsprechenden Einlegerschubstangen für die Formkavitäten 3.21, 3.22 und 3.23 derart ausgeführt, dass zum Einschieben der Einleger 11 in die Formkavitäten 3.11, 3.12, 3.13, 3.21, 3.22 und 3.23 die Einlegerladevorrichtung 4 nicht vollständig auf die Formhälfte 2.2 auffährt (in Figur 4 nicht dargestellt), sondern ein Abstand zwischen der Einlegervorrichtung 4 und der Formhälfte 2.2 verbleibt. Diese Zwischenposition sind durch Rückdrückstifte (in den Figuren nicht dargestellt) definiert, die bei geschlossenem Formwerkzeug 2 sich an der feststehenden Formhälfte 2.2 abstützen. Dadurch wird die Lage der Einlegervorrichtung 4 begrenzt. Zum Auswerfen der Formteile 10 bei offenem Formwerkzeug 2 wird die Einlegervorrichtung 4 unter Überwindung des genannten Abstandes vollständig auf die Formhälfte 2.2 gefahren, wodurch mittels der Einlegerschubstangen 4.1, 4.2 und 4.3 und die entsprechenden Einlegerschubstangen für die Formkavitäten 3.21, 3.22 und 3.23 die Formteile 10 bspw. auf ein Förderband ausgeworfen werden.

Anschließend wird die Einlegervorrichtung 4 entgegengesetzt zur Richtung der Formhälfte 2.2 bewegt, wodurch die Einlegerschubstangen 4.1, 4.2 und 4.3 aus den Einlegerzuführkanälen 7, 7.1 und 7.2 gezogen werden (ebenso die entsprechenden Einlegerschubstangen für die Formkavitäten 3.21, 3.22 und 3.23) und somit die mit diesen Einlegerschubstangen fluchtenden Ablagepositionen 5.11 leer, also ohne Einleger 11 sind. Diese freien Ablagepositionen 5.11 sind in Figur 5 zur Kennzeichnung als schwarze Fläche markiert.

Wird der Auswerferweg der Einlegerschubstangen 4.1, 4.2 und 4.3 und der entsprechenden Einlegerschubstangen für die Formkavitäten 3.21, 3.22 und 3.2 verkürzt, werden die Formteile 10 nicht auf ein Förderband ausgeworfen, sondern mittels des Entnahmeroboters 9.1 aus den Formkavitäten 3.11, 3.12, 3.13, 3.21, 3.22 und 3.23 entnommen. Hierzu weist der Entnahmeroboter 9.1 einen Entnahmeadapter 9.2 auf, mit welchem die sechs Formteile 10 gleichzeitig aus der Formhälfte 2.2 entnommen werden.

### Bezugszeichenliste

- 1: Vorrichtung zum Spritzgießen

- 2: Formwerkzeug
- 2.1: Formhälfte des Formwerkzeugs 2
- 2.10: Seitenwand der Formhälfte 2.1
- 2.2: Formhälfte des Formwerkzeugs 2
- 2.3: Magazinschacht der Formhälfte 2.1
- 2.30: Magazinschacht 2.3 begrenzende Seitenwand der Formhälfte 2.1

- 3.11: Formkavität des Formwerkzeugs 2
- 3.12: weitere Formkavität
- 3.13: weitere Formkavität
- 3.21: weitere Formkavität
- 3.22: weitere Formkavität
- 3.23: weitere Formkavität

- 4: Einlegerladevorrichtung
- 4.1: Einlegerschubstange der Einlegerladevorrichtung 4
- 4.2: Einlegerschubstange der Einlegerladevorrichtung 4
- 4.3: Einlegerschubstange der Einlegerladevorrichtung 4

- 5: Magazin
- 5.1: Einlegeraufnahmefläche
- 5.11: Ablageposition der Einlegeraufnahmefläche 5.1
- 5.12: Ablagekontur der Ablageposition 5.11
- 5.13: Ladebereich des Magazins 5
- 5.2: Trägerplatte des Magazins 5

- 6: weiteres Magazin
- 7: Einlegerzuführkanal
- 7.1: weiterer Einlegerzuführkanal
- 7.2: weiterer Einlegerzuführkanal

- 8.1: Schiebevorrichtung
- 8.11: Längsaktuator der Schiebevorrichtung 8.1
- 8.12: Queraktuator der Schiebevorrichtung 8.1
- 8.2: weitere Schiebevorrichtung
- 8.21: Längsaktuator der weiteren Schiebevorrichtung 8.2
- 8.22: Queraktuator der weiteren Schiebevorrichtung 8.2

- 9: Entnahmemittel
- 9.1: Entnahmeroboter
- 9.2: Entnahmeadapter

- 10: Formteil

- 11: Einleger des Formteils 10

- 20: Handhabungswerkzeug
- 20.1: Zuführroboter
- 20.2: Roboterarm des Zuführroboters 20.1

- 30: Fördervorrichtung
- 30.1: Wendelförderer der Fördervorrichtung 30
- 30.10: Sammelplatte des Wendelförderers 30.1
- 30.2: lineare Zuführung der Fördervorrichtung

- a1: Abstand
- a2: Abstand
- a3: Abstand
- R1: Radius eines Wellentals
- R2: Radius eines Wellenbergs
- r: Radius des Einlegers 11
- S: Spitze der Sägezahnkontur der Einlegeraufnahmefläche 5.1
- β: Winkel der flach ansteigenden Flanke der Sägezahnkontur

## Patentansprüche

1. Vorrichtung (1) zum Spritzgießen eines Formteils (10) mit einem Einleger (11), umfassend:
- ein zwei Formhälften (2.1, 2.2) aufweisendes Formwerkzeug (2) mit wenigstens einer Formkavität (3.1),
- eine Einlegerladevorrichtung (4) mit wenigstens einer Einlegerschubstange (4.1) zum Positionieren eines Einlegers (11) in der wenigstens einen Formkavität (3.11),
- wenigstens ein Magazin (5) mit in einer Reihe nebeneinander angeordneten Einlegern (11), wobei ein Einleger (11) mit der wenigstens einen Einlegerschubstange (4.1) fluchtet, und
- ein in der wenigstens einen Formkavität (3.11) endender Einlegerzuführkanal (7), in welchen der mit dem der wenigstens einen Einlegerschubstange (4.1) fluchtende Einleger (11) aus dem wenigstens einen Magazin (5) mittels der Einlegerschubstange (4.1) hinein schiebbar ist,
**dadurch gekennzeichnet, dass**
- das Magazin (5) eine waagerecht ausgerichtete Einlegeraufnahmefläche (5.1) mit benachbarten Ablagepositionen (5.11) für die Einleger (11) aufweist, wobei die Ablagepositionen (5.11) mit einer an die Kontur der Einleger (11) angepassten Ablagekontur (5.12) ausgebildet sind,
- das Magazin (5.1) einen Ladebereich (5.13) mit wenigstens einer frei zugänglichen Ablageposition (5.11) zum maschinellen Beladen desselben mit einem Einleger (11) aufweist, und
- zum Positionieren eines Einlegers (11) in der mit der Einlegerschubstange (4.1) fluchtenden Ablageposition (5.11) der im Ladebereich (5.13) abgelegte wenigstens eine Einleger (11) mittels einer Schiebevorrichtung (8.1) in Richtung eines benachbarten Einlegers (11) bewegbar ist, wobei die Einleger (11) auf der Einlegeraufnahmefläche (5.1) sukzessive in die jeweils benachbarte Ablageposition (5.11) schiebbar sind.

2. Vorrichtung (1) nach Anspruch 1,
**dadurch gekennzeichnet, dass**
der Abstand (a1) benachbarter Ablagepositionen (5.11) derart ausgebildet ist, dass die in diesen benachbarten Ablagepositionen (5.11) abgelegten Einleger (11) in Anlage liegen.

3. Vorrichtung (1) nach Anspruch 1 oder 2,
**dadurch gekennzeichnet, dass**
- das Magazin (5) in dem feststehenden Formteil (2.2) angeordnet ist,
- die Einlegeraufnahmefläche (5.1) des Magazins (5) zusammen mit einer Trennwand (2.30) des feststehenden Formteils (2.2) einen Magazinschacht (2.3) bildet, und
- der kleinste Abstand zwischen der Einlegeraufnahmefläche (5.1) und der Trennwand (2.30) wenige 1/10mm, insbesondere 3/10mm bis 5/10mm größer ist als die Erstreckung des Einlegers (11) senkrecht zur Trennwand (2.30).

4. Vorrichtung (1) nach einem der vorhergehenden Ansprüche,
**dadurch gekennzeichnet, dass**
die Einlegeraufnahmefläche (5.1) eine wellenförmige Oberflächenstruktur aus Wellentälern und Wellenbergen aufweist, wobei die Wellentäler als Ablagekontur (5.12) an die Kontur der Einleger (11) angepasst sind.

5. Vorrichtung (1) nach Anspruch 4,
**dadurch gekennzeichnet, dass**
der Radius (R2) eines Wellenberges der wellenförmigen Oberflächenstruktur der Einlegeraufnahmefläche (5.1) höchstens dem Radius (R1) des Wellentales entspricht.

6. Vorrichtung (1) nach einem der Ansprüche 1 bis 3,
**dadurch gekennzeichnet, dass**
die Einlegeraufnahmefläche (5.1) eine sägezahnförmige Oberflächenstruktur mit flach ansteigenden und steil abfallenden Flanken aufweist, wobei die Einleger (11) jeweils zwischen einer steil abfallenden Flanke und einer flach ansteigenden Flanke als an die Kontur der Einleger (11) angepasste Ablagekontur (5.12) auf der Einlegeraufnahmefläche (5.1) angeordnet sind.

7. Vorrichtung (1) nach Anspruch 6,
**dadurch gekennzeichnet, dass**
die flach ansteigende Flanke der sägezahnförmigen Oberflächenstruktur der Einlegeraufnahmefläche (5.1) zwischen 20° und 30° liegt.

8. Vorrichtung (1) nach einem der vorhergehenden Ansprüche,
**dadurch gekennzeichnet, dass**
- das Formwerkzeug (2) wenigstens eine weitere Formkavität (3.12) aufweist, welche in der Ebene der Einlegeraufnahmefläche (5.1) benachbart zu der wenigstens einen Formkavität (3.11) angeordnet ist,
- die Einlegerladevorrichtung (4) wenigstens eine weitere Einlegerschubstange (4.2) zum Positionieren eines Einlegers (11) in der weiteren Formkavität (3.12) aufweist, und
- ein in der weiteren Formkavität (3.12) endender Einlegerzuführkanal (7.1) vorgesehen ist, in welchen der mit dem der weiteren Einlegerschubstange (4.2) fluchtende Einleger (11) aus dem Magazin (5) mittels der weiteren Einlegerschubstange (4.2) hinein schiebbar ist.

9. Vorrichtung (1) nach einem der vorhergehenden Ansprüche,
**dadurch gekennzeichnet, dass**
- das Formwerkzeug (2) wenigstens eine weitere Formkavität (3.21) aufweist, welche in einer zur Ebene der Einlegeraufnahmefläche (5.1) des wenigstens einen Magazins (5) parallelen Ebene angeordnet ist, und
- in der parallelen Ebene ein weiteres Magazin (6) gemäß den vorhergehenden Ansprüchen in dem Formwerkzeug (2) angeordnet ist.

10. Vorrichtung (1) nach einem der vorhergehenden Ansprüche,
**dadurch gekennzeichnet, dass** die Einlegerladevorrichtung (4) als Auswerfervorrichtung ausgebildet ist, wobei die Einlegerschubstange (4.1, 4.2) ein Auswerfer ist.

11. Vorrichtung (1) nach einem der Ansprüche 1 bis 6,
**dadurch gekennzeichnet, dass** ein Entnahmemittel (9) vorgesehen ist, mit welchem bei offenem Formwerkzeug (2) ein spritzgegossenes Formteil (10) aus dem Formwerkzeug (2) entnehmbar ist.

12. Vorrichtung (1) nach einem der vorhergehenden Ansprüche,
**dadurch gekennzeichnet, dass** der Einleger (11) zylinderförmig ausgebildet ist.

## Claims

1. Device (1) for the injection molding of a molded part (10), having an insert (11) and comprising:
- a molding tool (2) comprising two mold halves (2.1, 2.2) and having at least one mold cavity (3.1),
- an insert loading device (4), having at least one insert push rod (4.1) for the positioning of an insert (11) in the at least one mold cavity (3.11),
- at least one cartridge holder (5), having a row of inserts (11) arranged next to one another, wherein an insert (11) is flush with the at least one insert push rod (4.1), and
- an insert delivery channel (7), which ends in the at least one mold cavity (3.11), and into which the insert (11), which is flush with the at least one insert push rod (4.1), can be pushed from the cartridge holder (5) by means of the insert push rod (4.1),
**characterized in that**
- the cartridge holder (5) comprises a horizontally aligned reception surface (5.1), having adjacent depository positions (5.11) for the inserts (11), wherein the depository positions (5.11) are implemented having a depository contour (5.12) adapted to the contour of the inserts (11),
- the cartridge holder (5.1) comprises a loading area (5.13), having at least one freely accessible depository position (5.11) for the mechanical loading of the latter with an insert (11), and
- the at least one insert (11) deposited in the loading area (5.13) is moveable in the direction of an adjacent insert (11) by means of a pushing device (8.1) in order to position an insert (11) in the depository position (5.11) which is flush with the insert push rod (5.11), wherein the inserts (11) on the insert reception surface (5.1) are successively moveable into the respective adjacent depository position (5.11).

2. Device (1) in accordance with claim 1,
**characterized in that**
the distance (a1) between adjacent depository positions (5.11) is implemented such that the inserts (11) deposited into these adjacent depository positions (5.11) are in abutment.

3. Device (1) in accordance with claim 1 or 2,
**characterized in that**
- the cartridge holder (5) is arranged in the stationary molded part (2.2),
- the insert reception surface (2.30) of the cartridge holder (5) forms, together with a separation panel (2.30) of the stationary molded part (2.2), a cartridge holder well (2.3), and
- the smallest distance between the insert reception surface (5.1) and the separation panel (2.30) is less than 1/10mm, in particular 3/10mm to 5/10mm larger than the extension of the insert (11) vertical to the separation panel (2.30).

4. Device (1) in accordance with any of the preceding claims,
**characterized in that**
the insert reception surface (5.1) comprises a corrugated surface structure of corrugation troughs and corrugation crests, wherein the corrugation troughs are adapted to the contour of the inserts (11) as a depository contour (5.12).

5. Device (1) in accordance with claim 4,
**characterized in that**
the radius (R2) of a corrugation crest of the corrugated surface structure of the insert reception surface (5.1) corresponds, at the most, to the radius (R1) of the corrugation trough.

6. Device (1) in accordance with any of claims 1 to 3,
**characterized in that**
the insert reception surface (5.1) comprises a saw tooth-like surface structure having gradually rising and steeply falling flanks, wherein each of the inserts (11) are arranged on the insert reception surface (5.1) between a steeply falling flank and a gradually rising flank as a depository contour (5.12) adapted to the contour of the inserts (11).

7. Device (1) in accordance with claim 6,
**characterized in that**
the gradually rising flank of the saw tooth-like surface structure of the insert reception surface (5.1) is at between 20° and 30°.

8. Device (1) in accordance with any of the preceding claims,
**characterized in that**
- the molding tool (2) comprises at least one mold cavity (3.12) which is arranged adjacently to the at least one mold cavity (3.11) in the plane of the insert reception surface (5.1),
- the insert loading device (4) comprises at least one further insert push rod (4.2) for the positioning of an insert (11) in the further mold cavity (3.12), and
- an insert delivery channel (7.1) is provided which ends in the further mold cavity (3.12) and into which the insert (11), which is flush with the further insert push rod (4.2), can be pushed from the cartridge holder (5) by means of the further insert push rod (4.2).

9. Device (1) in accordance with any of the preceding claims,
**characterized in that**
- the molding tool (2) comprises at least one further mold cavity (3.12), which is arranged in a plane parallel to the plane of the insert reception surface (5.1) of the at least one cartridge holder (5), and
- a further cartridge holder (6) in accordance with the preceding claims is arranged in the parallel plane in the molding tool (2).

10. Device (1) in accordance with any of the preceding claims,
**characterized in that**
the insert loading device (4) is implemented as an ejection device, wherein the insert push rod (4.1, 4.2) is an ejector.

11. Device (1) in accordance with any of claims 1 to 6,
**characterized in that**
extraction means (9) are provided, by means of which an injection molded part (10) can be removed from the molding tool (2) when the molding tool (2) is open.

12. Device (1) in accordance with any of the preceding claims,
**characterized in that**
the insert (11) is implemented in a cylindrical shape.

## Revendications

1. Dispositif (1) pour mouler par injection une pièce de forme (10) ayant un insert (11) comprenant :
- un moule (2) comprenant deux moitiés de moule (2.1, 2.2) ayant au moins une cavité de moule (3.1),
- un dispositif de chargement d'insert (4) ayant au moins une tige-poussoir d'insert (4.1) pour positionner un insert (11) dans au moins cette cavité de moule (3.11),
- au moins un magasin (5) avec des inserts (11) juxtaposés en rangée, un insert (11) étant aligné avec au moins la tige-poussoir d'insert (4.1), et
- un canal d'alimentation en inserts (7) qui se termine dans la cavité de moule (3.11), canal dans lequel peut être glissé l'insert (11) aligné sur au moins une tige-poussoir d'insert (4.1) à partir d'au moins un magasin (5) à l'aide de la tige-poussoir d'insert (4.1),
dispositif **caractérisé en ce que**
- le magasin (5) a une surface de réception d'inserts (5.1) orientée horizontalement, ayant des positions voisines de dépose (5.11) des inserts (11),
* les positions de dépose (5.11) ayant un contour de dépose (5.12) adapté au contour des inserts (11),
- le magasin (5.1) a une zone de chargement (5.13) avec au moins une position de dépose (5.11) librement accessible pour la charger mécaniquement avec un insert (11), et
- pour positionner un insert (11) dans la position de dépose (5.11) alignée sur la tige-poussoir d'insert (4.1), l'insert (11) déposé dans la zone de chargement (5.13) est déplacé avec un dispositif de coulissement (8.1) en direction d'un insert voisin (11),
* les inserts (11) étant coulissés sur la surface de réception d'insert (5.1) successivement dans la position de dépose (5.11) respectivement voisine.

2. Dispositif (1) selon la revendication 1,
**caractérisé en ce que**
l'écart (a1) des positions de dépose voisines (5.11) est tel que les inserts (11) déposés dans les positions de dépose voisines (5.11) sont en appui.

3. Dispositif (1) selon la revendication 1 ou 2,
**caractérisé en ce que**
- le magasin (5) est dans la partie de moule fixe (2.2),
- la surface de réception d'inserts (5.1) du magasin (5) est formée par une cloison (2.30) de la partie fixe de moule (2.2) formant un compartiment de magasin (2.3), et
- la plus petite distance entre la surface de réception d'inserts (5.1) et la cloison (2.30) est plus grande de quelques 1/10 millimètres, notamment 3/10 millimètres jusqu'à 5/10 millimètres que l'extension de l'insert (11) perpendiculairement à la cloison (2.30).

4. Dispositif (1) selon l'une des revendications précédentes,
**caractérisé en ce que**
la surface de réception d'inserts (5.1) est une structure à dessus ondulé, formé de creux et de sommets, les creux étant adaptés comme contours de dépose (5.12) au contour des inserts (11).

5. Dispositif (1) selon la revendication 4,
**caractérisé en ce que**
le rayon (R2) d'un sommet d'onde de la structure de dessus ondulée de la surface de réception d'inserts (5.1) correspond au plus au rayon (R1) du creux de l'onde.

6. Dispositif (1) selon l'une des revendications 1 à 3,
**caractérisé en ce que**
la surface de réception d'inserts (5.1) a une structure de dessus en forme de dents de scie avec des flans montants à faible pente et des flans descendants à forte pente, les inserts (11) étant respectivement placés entre un flan descendant à forte pente et un flan montant à faible pente comme contour des contours de dépose (5.12) adaptés au contour des inserts (11) sur la surface de réception d'inserts (5.1).

7. Dispositif (1) selon la revendication 6,
**caractérisé en ce que**
le flan montant à faible pente de la structure de dessus en dents de scie de la surface de réception d'inserts (5.1) est entre 20° et 30°.

8. Dispositif (1) selon l'une des revendications précédentes,
**caractérisé en ce que**
- le moule (2) comporte au moins une autre cavité de moule (3.12) dans le plan de la surface de réception d'inserts (5.1) au voisinage au moins de la cavité de moule (3.11),
- le dispositif de chargement d'inserts (4) a au moins une autre tige-poussoir d'insert (4.2) pour positionner un insert (11) dans l'autre cavité de moule (3.12), et
- un canal de guidage d'insert (7.1) se termine dans l'autre cavité de moule (3.12), canal dans lequel l'insert (11) aligné sur l'autre tige-poussoir d'insert (4.2) peut être poussé hors du magasin (5) avec l'autre tige-poussoir d'insert (4.2).

9. Dispositif (1) selon l'une des revendications précédentes,
**caractérisé en ce que**
- le moule (2) a au moins une autre cavité de moule (3.21) qui est dans un plan parallèle au plan de la surface de réception d'inserts (5.1) du magasin (5), et
- dans le plan parallèle, dans le moule (2) il y a un autre magasin (6) selon les revendications précédentes.

10. Dispositif (1) selon l'une des revendications précédentes,
**caractérisé en ce que**
le dispositif de chargement d'insert (4) est un dispositif éjecteur, la tige-poussoir d'insert (4.1, 4.2) étant un éjecteur.

11. Dispositif (1) selon l'une des revendications 1 à 6,
**caractérisé par**
un moyen de prélèvement (9) avec lequel lorsque l'outil de moule (2) est ouvert, on peut prélever du moule (2) une pièce de forme (10), moulée par injection.

12. Dispositif (1) selon l'une des revendications précédentes,
**caractérisé en ce que**
l'insert (11) est de forme cylindrique.
